# EUROPÄISCHE PATENTANMELDUNG

(11) **EP 0 772 011 A1**
(43) Veröffentlichungstag der Anmeldung: **07.05.1997**
(21) Anmeldenummer: 96117480.2
(22) Anmeldetag: 31.10.1996
(51) Int. Cl.: F24H 8/00, F24H 9/00

(54) **Heizgerät mit einem durch ein Brennstoff-Luftgemisch gespeisten Brenner**

(30) Priorität: 03.11.1995 DE 29517394 U; 28.10.1996 DE 29618380 U
(71) Anmelder: ROBERT BOSCH GMBH, 70442 Stuttgart (DE)
(72) Erfinder: Jantzer, Michael, 70372 Stuttgart (DE); Hocker, Thomas, 67434 Neustadt (DE); Klink, Hans-Joachim, 73235 Weilheim (DE)

(57) **Zusammenfassung**

Die Erfindung bezieht sich auf ein Heizgerät mit einem durch ein Brennstoff-Luftgemisch gespeisten Brenner (1), einer Brennkammer (2) und einem Wärmeübertrager (3), in welchem das Gas mindestens im unteren Leistungsbereich des Geräts unter den Taupunkt des Wasserdampfes abkühlt, und ferner mit einer im Abgasweg angeordneten Einrichtung zum Anheben der Abgastemperatur auf einen für Kamin- bzw. Außenwandanschluß zulässigen Wert durch Wärmezufuhr aus dem Verbrennungsgas.

Es wird vorgeschlagen, daß die Wärmezufuhr aus dem Verbrennungsgas lastabhängig und/oder abhängig von der Temperatur des erhitzten Mediums gesteuert bzw. geregelt ist. Dadurch läßt sich die Abgastemperatur über den gesamten Lastbereich möglichst nahe an dem vorgeschriebenen Mindestwert halten und dadurch der Wirkungsgrad gegenüber Geräten mit ungeregelter Rückerwärmung des Abgases steigern.

## Beschreibung

### Stand der Technik

Die Erfindung geht aus von einem Heizgerät nach den Gattungsmerkmalen des Hauptanspruchs. Bei Heizgeräten, welche die Kondensationswärme des im Verbrennungsgas enthaltenen Wasserdampfes nutzen bzw. bei welchem das Abgas auf einen unter Taupunkttemperatur von ca. 55° C liegenden Wert abgekühlt ist, muß das Abgas nach dem Verlassen des Wärmeübertragers wieder auf eine Temperatur hinter dem Gerät von mindestens 80°C erwärmt werden, damit die Abgasabführung kondensatfrei bleibt. Bei bekannten Heizgeräten der gattungsmäßigen Art wird ein Teilstrom des Verbrennungsgases über einen Bypass ungeregelt, das heißt unbeeinflußt von der Abgastemperatur, dem aus dem Wärmeübertrager austretenden Abgas zugemischt. Das hat zur Folge, daß bei Auslegung des Geräts dem Nennlastbetrieb eine über den Grenzwert von 80° C liegende Abgastemperatur zugeordnet werden muß, wenn im Minimallastbetrieb dieser Grenzwert mit Sicherheit nicht unterschritten werden soll.

Ferner sind Heizgeräte der gattungsmäßigen Art bekannt (AT 1358/93), bei denen der gesamte Abgasvolumenstrom zum Zweck der Rückerwärmung durch einen die Brennkammer umgebenden Ringraum mit der Brennkammerwand als Wärmeübertragungsfläche geleitet wird. Auch bei dieser Ausführung wird die Ringerwärmung nicht gezielt gesteuert, so daß sich auch hier die gleichen Probleme wie bei der vorbeschriebenen Geräteart ergeben.

Die DE-OS 40 27 569 beschreibt einen mit variabler Leistung arbeitenden Heizkessel, bei dem die Abgastemperatur in Strömungsrichtung hinter den Wärmetauscherrippen regelmäßig oberhalb des Taupunkts gehalten wird. Für den Sonderfall, daß bei einem derartigen Gerät die Abgastemperatur unter den Taupunkt absinkt, ist eine thermisch gesteuerte Bypassleitung vorgesehen, welche die Abgastemperatur so weit anhebt, daß die sich an den Wärmetauscher anschließende Abgasabführung kondensatfrei bleibt. Im Gegensatz zu einem derartigen Heizkessel wird bei den gattungsmäßigen Heizgeräten das Abgas bewußt unter den Taupunkt abgekühlt, um die im Wasserdampf der Abgase gebundene Wärme nutzen oder einen Niedertemperaturbetrieb durchführen zu können. Danach wird die Temperatur des aus dem Wärmeübertrager austretenden Abgases durch Wärmezufuhr aus dem Verbrennungsgas auf einen Wert von mindestens 80° C angehoben.

### Vorteile der Erfindung

Durch die erfindungsgemäße Maßnahme nach den Merkmalen des Hauptanspruchs kann über den gesamten Lastbereich des Heizgerätes die Abgastemperatur möglichst nahe an der vorgeschriebenen Mindesttemperatur gehalten werden. Wenn bei Minimallast die Abgastemperatur hinter dem Wärmeübertrager gering ist, wird relativ viel Wärme aus den Verbrennungsgasen zugeführt. Mit zunehmender Last wird die Wärmezufuhr gezielt zunehmend so gedrosselt, daß die resultierende Abgastemperatur den vorgeschriebenen Mindestwert möglichst wenig übersteigt.

Dadurch wird die Kondensationswärme des Wasserdampfes optimal genutzt und der Wirkungsgrad zum Beispiel gegenüber einem Brennwertgerät mit ungeregelter Rückerwärmung des Abgases weiter erhöht. Ferner ist erreicht, daß konventionelles Abgaszubehör für Kamin- bzw. Außenwandgeräte benutzt werden kann.

Durch die in den Unteransprüchen aufgeführten Merkmale sind vorteilhafte Ausgestaltungen der Anordnung nach dem Hauptanspruch möglich.

Eine nur wenig Abweichungen von einer üblichen Brennkammerausführung aufweisende Anordnung ergibt sich, wenn die zur Rückerwärmung des Abgases dienende Wärmezufuhr aus dem Verbrennungsgas über einen die Brennkammer mit einem Abgasraum verbindenden Bypasskanal erfolgt, dessen wirksamer Strömungsquerschnitt lastabhängig und/oder abhängig von der Temperatur des erhitzten Mediums gesteuert bzw. geregelt ist.

Eine alternative Ausführung ergibt sich, wenn die Wärmezufuhr aus dem Verbrennungsgas in einem vom Verbrennungsgas beaufschlagten Wärmeübertrager erfolgt, der von einem Teilstrom des Abgases durchströmt ist und dem vorzugsweise ein gesteuerter bzw. geregelter Bypass zugeordnet ist.

Eine exakte Regelung der resultierenden Abgastemperatur im gesamten Leistungsbereich des Heizgerätes läßt sich erreichen, wenn die Wärmezufuhr aus dem Verbrennungsgas abhängig von mindestens einer Zustandsgröße des Abgases gesteuert bzw. geregelt ist.

Dieser Vorschlag läßt sich einfach verwirklichen, wenn die Wärmezufuhr abhängig von der Abgastemperatur gesteuert bzw. geregelt ist.

Anstelle der Abgastemperatur bzw. zusätzlich dazu kann auch der Feuchtigkeitsgehalt des Abgases erfaßt und zur Steuerung bzw. Regelung der Wärmezufuhr dienen.

Wenn die Wärmezufuhr abhängig von der Drehzahl eines den Brenner beaufschlagenden Gebläses bzw. dem vom Gebläse geförderten Volumenstrom gesteuert bzw. geregelt wird, erübrigen sich wärme- und/oder feuchtigkeitsempfindliche Sensoren und Stellglieder im Abgasweg.

Bei Heizgeräten, bei denen die Rückerwärmung des Abgases wie vorstehend schon erwähnt, durch Beimischung von heißem Verbrennungsgas über einen Bypasskanal erfolgt, oder bei denen ein von einem Teilstrom des Abgases durchströmter, vom Verbrennungsgas beaufschlagter Wärmeübertrager von einem Bypass überbrückt ist, ergibt sich eine einfache Ausführung, wenn der wirksame Querschnitt eines Bypasskanals durch ein vorzugsweise an der Einmündung des Bypasskanals in den Abgasraum angeordnetes Ventilglied überwacht ist, welches von mindestens einer internen Betriebskenngröße beeinflußt ist.

Das Ventilglied kann durch mechanische und/oder elektrische bzw. elektronische Bauelemente beeinflußt sein. Für eine mechanische Lösung wird vorgeschlagen, daß ein wärmeempfindliches Steuerglied als ein langgestrecktes, vom Abgasstrom umströmtes, einseitig eingespanntes Bimetallelement ausgebildet ist, an dessen freiem Ende das Ventilglied, vorzugsweise thermisch isoliert, befestigt ist.

Als weitere vorteilhafte Ausführungsformen für das wärmeempfindliche Steuerglied können ein spiralförmig ausgebildetes Bimetallelement oder ein Dehnstoffelement vorgesehen werden.

Das wärmeempfindliche Steuerglied kann sowohl stromauf als auch stromab der Einmündung des Bypasskanals im Abgasraum angeordnet sein. Bei einer elektronischen Steuerung bzw. Regelung kann ein Temperatursensor und ggf. ein Feuchtesensor stromab einer Strömungssicherung oder, bei einem Außenwandgerät am Ende eines Abgasrohres angeordnet sein.

### Zeichnung

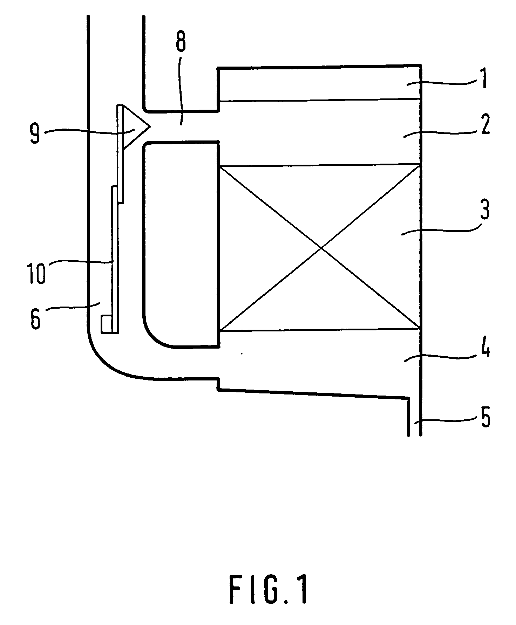

Acht Ausführungsbeispiele der Erfindung sind in der Zeichnung schematisch dargestellt und in der nachfolgenden Beschreibung näher erläutert. Die Figuren 1 bis 8 zeigen je die hier interessierenden Teile eines Heizgerätes nach einem der Ausführungsbeispiele.

### Beschreibung der Ausführungsbeispiele

Das Heizgerät nach Figur 1 hat einen einen Brenner 1, dem ein Brenngas- Luftgemisch durch ein nicht dargestelltes Gebläse zugeführt ist. Der Brenner 1 sitzt am oberen Ende einer Brennkammer 2, die durch einen Wärmeübertrager 3 bekannter Bauart nach unten abgeschlossen ist. Stromab des Wärmeübertragers 3 ist ein Abgasraum 4 angeordnet, an dessen tiefster Stelle eine Kondensatabführung 5 vorgesehen ist. Der Abgasraum 4 ist stromab als Abgasrohr 6 ausgebildet, das nach oben zu einem nicht mehr dargestellten Kamin- bzw. Außenwandanschluß geführt ist.

An die Brennkammer 2 ist ein Bypaßkanal 8 angeschlossen, der unter Umgehung des Wärmeübertragers 3 unmittelbar in das Abgasrohr 6 mündet. Die Mündung ist von einem Ventilkegel 9 überwacht, der thermisch isoliert am freien Ende eines einseitig eingespannten Bimetallstreifens 10 befestigt ist. Dieser ist vor der Einmündung des Bypaßkanals 8 im Abgasrohr 6 so angeordnet, daß er von dem aus dem Wärmeübertrager 3 heraustretenden Abgas längs überstrichen wird.

Der Bimetallstreifen 10 ist so ausgebildet, daß er sich mit zunehmender Erwärmung im Uhrzeigersinn verformt, wobei der Ventilkegel 9 den Mündungsquerschnitt des Bypaßkanales 8 zunehmend verengt. Im Minimallastbetrieb des Heizgerätes nimmt der Bimetallstreifen 10 die dargestellte Ausgangslage ein, in welcher der Mündungsquerschnitt am wenigsten verengt ist und relativ viel Gas aus der Brennkammer 2 dem im Abgasrohr 6 aufsteigenden Abgasstrom zugemischt wird. Im Nennlastbetrieb hat der Ventilkegel 9 die Beimischung aus der Brennkammer 2 soweit gedrosselt, daß die resultierende Abgastemperatur nach den vorgeschriebenen Minimalwert von 80°C nicht nennenswert übersteigt.

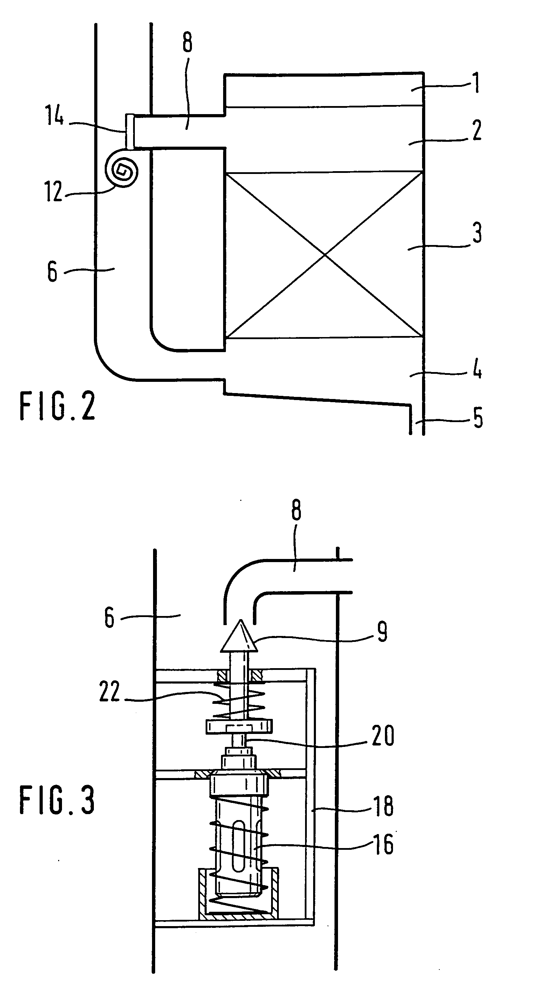

Bei den weiteren Ausführungsbeispielen sind gleiche bzw. gleichwirkende Teile durch die gleichen Bezugszeichen wie in Figur 1 gezeichnet. Beim Heizgerät nach Figur 2 ist das wärmeempfindliche Steuerglied für den Bypasskanal 8 eine einseitig eingespannte Bimetallspirale 12, an deren freiem Ende das als Kappe 14 ausgebildete Ventilglied befestigt ist, daß lastabhängig den Bypasskanal 8 mehr oder weniger verschließt. Die Funktionsweise ist dabei die gleiche wie im zuvor beschriebenen Ausführungsbeispiel.

Beim Ausführungsbeispiel nach Figur 3 ist das wärmeempfindliche Steuerglied als Dehnstoffelement 16 ausgebildet, das durch eine entsprechende Haltevorrichtung 18 im Abgasrohr 6 befestigt ist. Das Dehnstoffelement 16 ist an seinem freien Ende über einen Arbeitskolben 20 mit dem als Ventilkegel 9 ausgebildeten Ventilglied verbunden, der je nach Lastbetrieb des Heizgeräts den Bypaßkanal 8 mehr oder weniger verschließt. Das Dehnstoffelement 16 arbeitet in an sich bekannter Art und Weise: Nimmt die Abgastemperatur im Abgasrohr 6 zu, schmilzt die Dehnstofffüllung, wobei ihr Volumen stark zunimmt. Damit wird der Mündungsquerschnitt des Bypaßkanals 8 zunehmend verengt. Bei sinkenden Abgastemperaturen bewirkt eine Rückstellfeder 22 die Rückbewegung des Arbeitskolbens 20.

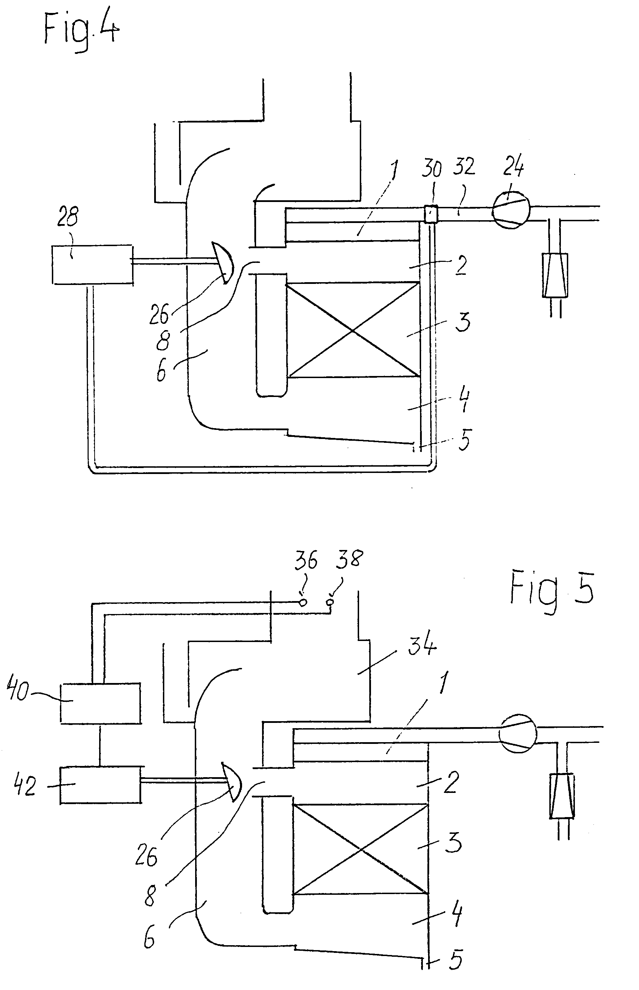

Beim Heizgerät nach Figur 4 wird dem Brenner 1 das Brennstoff-Luftgemisch durch ein Gebläse 24 zugeführt, dessen Drehzahl bzw. Fördervolumen entsprechend der Wärmeanforderung an das Gerät gesteuert ist. Die Mündung des Bypasskanals 8 in das Abgasrohr 6 ist von einem Ventilschließglied 26 überwacht, das mit einer Verstelleinrichtung 28 mechanisch gekoppelt ist. Diese wird pneumatisch betätigt durch einen Steuerdruck, der in einem Druckerzeuger 30 in der Förderleitung 32 aus dem Fördervolumenstrom des Gebläses 24 abgeleitet ist. Dieser und der Steuerdruck steigen mit zunehmender Wärmeanforderung an, wodurch die Verstelleinrichtung 28 wie gewünscht die Mündung des Bypasskanals 8 zunehmend schließt. Die Anordnung könnte auch so getroffen sein, daß die wärmebedarfsabhängig gesteuerte Drehzahl des Gebläses 24 elektronisch ausgewertet als elektrisches Steuersignal an eine entsprechend ausgebildete Verstelleinrichtung übermittelt wird.

Beim Heizgerät nach Figur 5 mündet das Abgasrohr 6 in einen als Strömungssicherung ausgebildeten Abgaskasten 34, in dessen Ausgangsbereich ein den Feuchtegehalt des abströmenden Abgases messender Sensor 36 und ein die Abgastemperatur erfassender Sensor 38 angeordnet sind. Die Sensorsignale werden über eine elektronische Auswerteschaltung 40 einer entsprechend ausgebildeten Verstelleinrichtung 42 für das den Bypasskanal 8 überwachende Ventilschließglied 26 übermittelt.

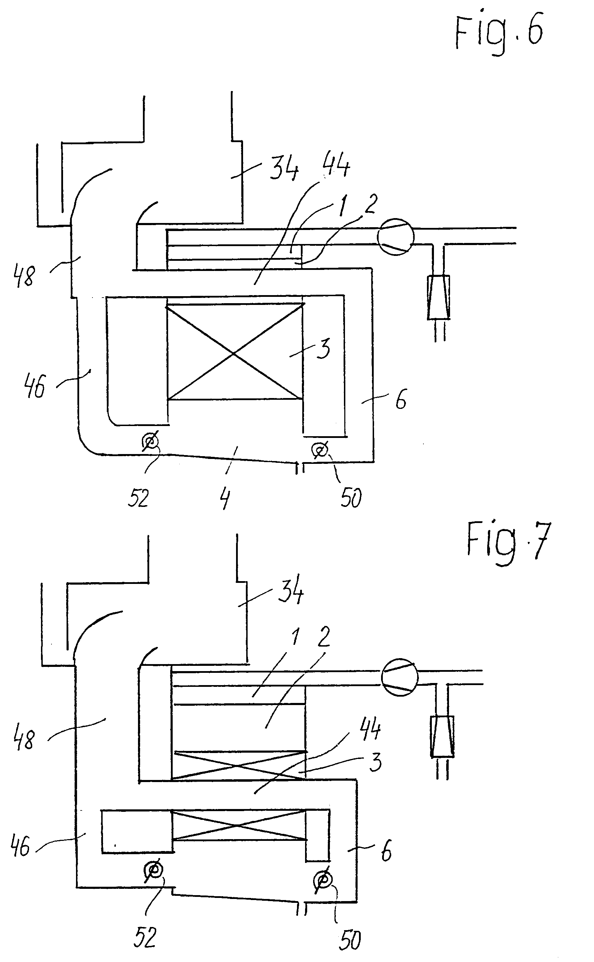

Die Heizgeräte nach den Figuren 6 bis 8 unterscheiden sich von den vorbeschriebenen Ausführungen dadurch, daß die Rückerwärmung des Abgases in einem vom Verbrennungsgas beaufschlagten Wärmeübertrager erfolgt, der von einer lastabhängig bzw. abhängig von der Temperatur des erhitzten Mediums gesteuerten bzw. geregelten Teilmenge des Abgases durchströmt ist.

Beim Heizgerät nach Figur 6 ist der Abgasraum 4 über das Abgasrohr 6 mit einem Wärmeübertrager 44 verbunden, der in der Brennkammer 2 angeordnet und von den heißen Verbrennungsgasen beaufschlagt ist. Der Abgasraum 4 ist ferner über einen Bypasskanal 46 mit einem Abgasrohr 48 verbunden, das vom Wärmeübertrager 44 in den Abgaskasten 34 führt. Die Strömungsquerschnitte des Abgasrohres 6 und des Bypasskanals 46 sind von Ventilen 50, 52 überwacht, deren klappenförmige Schließglieder je von einem der Abgastemperatur ausgesetzten Bimetallelement beeinflußt sind.

Die Ventile 50, 52 und die Strömungsquerschnitte des Abgasrohres 6 und des Bypasskanals 46 sind so ausgebildet und bemessen, das je nach Abgastemperatur ein mehr oder weniger großer Anteil des Abgasvolumens durch den Wärmeübertrager 44 strömt und dort aufgeheizt wird. Im Extremfall, das heißt bei Minimallast, kann das Ventil 52 den Bypasskanal 46 schließen, so daß das gesamte Abgasvolumen durch den Wärmeübertrager 44 strömt und die resultierende Temperatur des anströmenden Abgases den vorgeschriebenen Mindestwert erreicht.

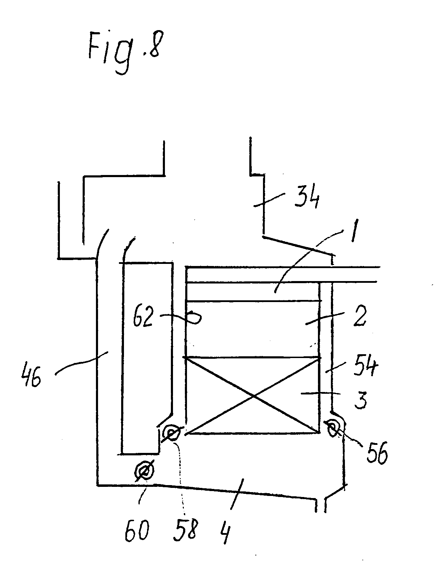

Das Heizgerät nach Figur 7 unterscheidet sich von dem vorbeschriebenen Gerät nur dadurch, daß der Wärmeübertrager 44 für das Abgas nicht in der Brennkammer 2 angeordnet, sondern in den Wärmeübertrager 3 für das aufzuheizende Medium integriert ist.

Beim Heizgerät nach Figur 8 führt vom Abgasraum 4 ein Ringraum 54 in den Abgaskasten 34, der die Brennkammer 2 und den Wärmeübertrager 3 mit radialem Abstand umgibt. Der Abgasraum 4 ist ferner über einen Bypasskanal 46 mit dem Abgaskasten 34 verbunden. Die Strömungsquerschnitte des Ringraumes 54 und des Bypasskanals 46 sind von Ventilen 56, 58, 60 überwacht, deren Schließglieder von der Abgastemperatur ausgesetzten Bimetallelementen beeinflußt sind.

Der Ringraum 54 bildet zusammen mit der als Wärmeübertragungsfläche dienenden Brennkammerwand 62 einen Wärmeübertrager für einen Abgasstrom, dessen Anteil am gesamten Abgasvolumen durch die Ventile 56, 58, 60 im gewünschten Sinn gesteuert ist.

Der Gegenstand der Erfindung ist nicht auf den Einsatz in Heizgeräten mit Brennwerttechnik beschränkt, sondern auch bei sogenannten Niedertemperaturheizungen einsetzbar, wo aufgrund von niedrigen Vor- und Rücklauftemperaturen insbesondere im Teillastbereich die Gefahr der Taupunktunterschreitung des Abgases in der Abgasabführung besteht.

## Patentansprüche

1. Heizgerät mit einem durch ein Brennstoff-Luftgemisch gespeisten Brenner, einer Brennkammer und einem Wärmeübertrager, in welchem das Verbrennungsgas mindestens im unteren Leistungsbereich des Gerätes unter den Taupunkt des Wasserdampfes abkühlt, ferner mit einer im Abgasweg angeordneten Einrichtung zum Anheben der Abgastemperatur auf einen für Kamin- bzw. Außenwandanschluß zulässigen Wert durch Wärmezufuhr aus dem Verbrennungsgas, dadurch gekennzeichnet, daß die Wärmezufuhr aus dem Verbrennungsgas lastabhängig und/oder abhängig von der Temperatur des erhitzten Mediums gesteuert bzw. geregelt ist.

2. Heizgerät nach Anspruch 1, dadurch gekennzeichnet, daß die zur Rückerwärmung des Abgases dienende Wärmezufuhr aus dem Verbrennungsgas über einen die Brennkammer (2) mit einem Abgasraum (6) verbindenden Bypasskanal (8) erfolgt, dessen wirksamer Strömungsquerschnitt gesteuert bzw. geregelt ist.

3. Heizgerät nach Anspruch 1, dadurch gekennzeichnet, daß die Wärmezufuhr zur Rückerwärmung des Abgases in einem vom Verbrennungsgas beaufschlagten Wärmeübertrager (44, 54) erfolgt, der von einem Teilstrom des Abgases durchströmt ist und dem vorzugsweise ein gesteuerter bzw. geregelter Bypass (46) zugeordnet ist.

4. Heizgerät nach einem der Ansprüche 1 bis 3, dadurch gekennzeichnet, daß die Wärmezufuhr abhängig von mindestens einer Zustandsgröße des Abgases gesteuert bzw. geregelt ist.

5. Heizgerät nach Anspruch 4, dadurch gekennzeichnet, daß die Wärmezufuhr abhängig von einer Abgastemperatur gesteuert bzw. geregelt ist.

6. Heizgerät nach einem der Ansprüche 1 bis 4, dadurch gekennzeichnet, daß die Wärmezufuhr abhängig vom Feuchtegehalt des Abgases gesteuert bzw. geregelt ist.

7. Heizgerät nach einem der Ansprüche 1 bis 3, dadurch gekennzeichnet, daß die Wärmezufuhr abhängig von der Drehzahl eines den Brenner beaufschlagenden Gebläses (24) bzw. dem vom Gebläse geförderten Volumenstrom gesteuert bzw. geregelt ist.

8. Heizgerät nach Anspruch 2, dadurch gekennzeichnet, daß der wirksame Strömungsquerschnitt des Bypasskanals (8) durch ein vorzugsweise an der Einmündung des Bypasskanals (8) in den Abgasraum (6) angeordnetes Ventilglied (9, 14, 26) überwacht ist, welches von mindestens einer internen Betriebskenngröße beeinflußt ist.

9. Heizgerät nach Anspruch 8, dadurch gekennzeichnet, daß ein wärmeempfindliches Steuerglied (10) ein langgestrecktes, vom Abgas umströmtes, einseitig eingespanntes Bimetallelement ist, an dessen freiem Ende das Ventilglied (9), vorzugsweise thermisch isoliert, befestigt ist.

10. Heizgerät nach Anspruch 2, dadurch gekennzeichnet, daß ein wärmeempfindliches Steuerglied ein vom Abgas umströmtes, an einer Haltevorrichtung (18) befestigtes Dehnstoffelement ist.
